# EUROPÄISCHE PATENTSCHRIFT

(11) **EP 3 852 213 B1**
(45) Veröffentlichungstag und Bekanntmachung des Hinweises auf die Patenterteilung: **02.09.2026**
(21) Anmeldenummer: 20204890.6
(22) Anmeldetag: 30.10.2020
(51) Int. Cl.: H02J 3/32, H02J 3/38

(54) **STEUERUNGSEINHEIT FÜR EINE ENERGIEEINSPEISEEINHEIT, ENERGIEEINSPEISEEINHEIT, ENERGIEEINSPEISESYSTEM UND NETZINFRASTRUKTUR**
ENERGY SUPPLY UNIT, CONTROL UNIT FOR AN ENERGY SUPPLY UNIT, ENERGY SUPPLY SYSTEM AND NETWORK INFRASTRUCTURE
UNITÉ DE COMMANDE POUR UNITÉ D'ALIMENTATION ÉLECTRIQUE, UNITÉ D'ALIMENTATION ÉLECTRIQUE, SYSTÈME D'ALIMENTATION ÉLECTRIQUE ET INFRASTRUCTURE DE RÉSEAU

(30) Priorität: 14.01.2020 DE 102020000174
(43) Veröffentlichungstag der Anmeldung: 21.07.2021
(73) Patentinhaber: Innogy SE, 45128 Essen (DE)
(72) Erfinder: Kledewski, Ingo, 44319 Dortmund (DE)
(74) Vertreter: Gunzelmann, Rainer

(56) Entgegenhaltungen:
- WO-A1-2013/057516
- DE-A1- 102012 109 474
- US-A1- 2013 113 413
- US-A1- 2013 147 272
- US-A1- 2018 287 388

## Beschreibung

### TECHNISCHES GEBIET

Die vorliegende Offenbarung betrifft allgemein das technische Gebiet der Einspeisung von elektrischer Energie in ein elektrisches Versorgungsnetz. Insbesondere betrifft die vorliegende Offenbarung eine Steuerungseinheit für eine Energieeinspeiseeinheit, eine Energieeinspeiseeinheit zur Einspeisung von elektrischer Energie in ein elektrisches Versorgungsnetz, ein Energieeinspeisesystem mit einer Steuerungseinheit, einer Energieeinspeiseeinheit und einem Energieerzeuger, und eine Netzinfrastruktur mit einem Energieeinspeisesystem und einem mit diesem über ein elektrisches Versorgungsnetz verbundenen externen Energieabnehmer.

### HINTERGRUND

Private und öffentliche Gebäude werden immer öfter mit einer regenerativen Energiequelle, beispielsweise eine Photovoltaikanlage, ausgestattet. Eine solche Photovoltaikanlage umfasst üblicherweise eine Vielzahl von Photovoltaikmodulen auf dem Dach oder an der Fassade des Gebäudes, einen Wechselrichter zur Umwandlung des von den Photovoltaikmodulen erzeugten Gleichstroms in Wechselstrom, eine Batterie zum Zwischenspeichern erzeugter jedoch nicht unmittelbar benötigter Energie, einen Laderegler zum Aufladen der Batterie und zum Verhindern von zu hohen oder zu niedrigen Ladespannungen und eine Energieeinspeiseeinheit zum Einspeisen von von den Photovoltaikmodulen erzeugter elektrischer Energie in das öffentliche Versorgungsnetz.

Bei ausreichender Sonnenstrahlung erzeugt die Photovoltaikanlage Strom und dieser Strom wird in das Hausnetz gespeist und von den elektrischen Verbrauchern (zum Beispiel Kühlschrank, Fernseher, Waschmaschine, etc.) im Gebäude verbraucht. Reicht der von den Photovoltaikmodulen erzeugte Strom nicht aus um den Energieeigenverbrauch zu decken, so wird Strom von einem Netzbetreiber zugekauft. Wird von den Photovoltaikmodulen mehr Strom erzeugt als benötigt, so wird die Batterie aufgeladen. Ist die Batterie vollgeladen und es wird weiterhin von den Photovoltaikmodulen mehr Strom erzeugt als benötigt wird, so wird dieser Strom unter Steuerung der Energieeinspeiseeinheit in das öffentliche Versorgungsnetz eingespeist. Bei einer solchen Überschusseinspeisung wird die eingespeiste Energie meist von dem Netzbetreiber, an dessen Netz die Photovoltaikanlage angeschlossen ist, abgerechnet. Dazu hat der Betreiber der Photovoltaikanlage mit dem Netzbetreiber einen Vergütungsvertrag abgeschlossen.

Die Druckschrift DE 10 2011 085 676 A1 betrifft eine Energieeinspeiseeinheit für ein Gebäude, die unter Berücksichtigung von im Einspeisepunkt anfallenden Wirk-und Blindleistungen, dem Eigenbedarf und einer zulässigen Einspeiseleistung eine Netzeinspeisung selektiv steuert.

Die Druckschrift US 2018/287388 A1 betrifft eine Technik zur kontrollierten Verteilung von integrierten Stromversorgungen für elektrische Lasten.

Die Druckschrift US 2013/113413 A1 betrifft ein netzgekoppeltes Solar-Batterieladegerät für ein Energiemanagement eines Haus und eines Fahrzeugs.

Durch den Ausbau von Erzeugern erneuerbarer Energie im Haus- bzw. Gebäudebereich gibt es immer mehr Anschlüsse an die elektrischen Übertragungs- und Verteilernetze im Zweiwegebetrieb. Dies führt zu einer Abgabe und Aufnahme von Strom an einer Vielzahl von Stellen der Übertragung-und Verteilernetze. Eine große Herausforderung für die Netzbetreiber ist dabei die Sicherung der Netzstabilität, d.h. die Gewährleistung einer stabilen und unterbrechungsfreien Stromversorgung. Nur wenn zu jedem Zeitpunkt genauso viel Strom ins Versorgungsnetz eingespeist wird, wie verbraucht wird, kann die Netzstabilität gehalten werden. Zur Sicherung der Netzstabilität trägt einerseits eine möglichst schwankungsfreie Netzspannung bei sowie andererseits eine gleichmäßige Netzfrequenz. Ist der Verbrauch elektrischer Leistung geringer als die Produktion, so ist die Netzfrequenz höher. Ist der Verbrauch grösser als die Produktion, so ist die Netzfrequenz tiefer. Geraten Netzspannung bzw. Netzfrequenz außerhalb ihrer Toleranzbereiche, können Geräte, die an das Versorgungsnetz angeschlossen sind, Schaden nehmen. Im schlimmsten Fall bricht die Stromversorgung vollständig zusammen.

Die Netzbetreiber sind für die Versorgungssicherheit und Netzstabilität verantwortlich und rufen Maßnahmen, mit denen die Netzstabilität gesichert wird, sogenannte Systemdienstleistungen, von anderen Nutzern des elektrischen Versorgungsnetzes ab. Zu den abgerufenen Systemdienstleistungen zählen Blindleistung, die eine schwankungsfreie Netzspannung ermöglicht, sowie die Bereitstellung von Regelenergie, die eine gleichmäßige Netzfrequenz gewährleistet.

Zur Sicherung der Netzstabilität kann es von Nutzen sein, von einem lokalen Energieerzeuger, beispielsweise einer Photovoltaikanlage, erzeugte elektrische Energie in das elektrische Versorgungsnetz einzuspeisen. Es liegt jedoch in der Hand des lokalen Energieerzeugers, beispielsweise dem Betreiber der Photovoltaikanlage, ob er die von ihm erzeugte elektrische Energie in das öffentliche Versorgungsnetz einspeist. Ferner hat der lokale Energieerzeuger üblicherweise keine dahingehende Information, ob zu einem bestimmten Zeitpunkt die Einspeisung der von ihm erzeugten elektrischen Energie in das elektrische Versorgungsnetz zur Sicherung der Netzstabilität gewünscht ist oder nicht. Insbesondere findet keine Kommunikation bzw. kein unmittelbarer Austausch von Information zwischen dem lokalen Energieerzeuger und dem Netzbetreiber bzw. dem extern Energieabnehmer statt.

### KURZER ABRISS

Der vorliegenden Offenbarung liegt die Aufgabe zugrunde, eine Steuerungseinheit für eine Energieeinspeiseeinheit, eine Energieeinspeiseeinheit zur Einspeisung von elektrischer Energie in ein elektrisches Versorgungsnetz, ein Energieeinspeisesystem und eine Netzinfrastruktur bereitzustellen, welche zur einer erhöhten Netzstabilität eines elektrischen Versorgungsnetzes beitragen.

Diese Aufgabe wird durch die Steuerungseinheit gemäß Anspruch 1 gelöst.

Gemäß einem ersten Aspekt wird eine Steuerungseinheit für eine Energieeinspeiseeinheit zur Einspeisung von elektrischer Energie in ein elektrisches Versorgungsnetz bereitgestellt, wobei die Energieeinspeiseeinheit mit dem elektrisches Versorgungsnetz und einem Energieerzeuger elektrisch verbunden ist, und die Steuerungseinheit eine erste Kommunikationsschnittstelle, die dazu eingerichtet ist, über ein Kommunikationsnetzwerk einen ersten Wert von einem externen Energieabnehmer, der über das elektrische Versorgungsnetz mit der Energieeinspeiseeinheit verbunden ist, zu empfangen und eine erste Datenspeichereinheit, die dazu eingerichtet ist, einen zweiten Wert zu speichern, aufweist, wobei die Steuerungseinheit dazu eingerichtet ist, den ersten Wert mit dem zweiten Wert zu vergleichen und in Abhängigkeit von dem Vergleichsergebnis die Einspeisung der elektrischen Energie in das elektrische Versorgungsnetz zu steuern.

Bei dem elektrischen Versorgungsnetz, umgangssprachlich auch Stromnetz genannt, handelt es sich um ein elektrisches Netzwerk zu Übertragung und Verteilung elektrischer Energie, welches Leitungen, wie Freileitungen und Erdkabel, und dazugehörige Einrichtungen, wie Schalt- und Umspannwerke, umfasst. Der Energieerzeuger kann als jegliche Art von Energieproduzent, insbesondere als Erzeuger regenerativer Energie, wie zum Beispiel eine Photovoltaikanlage, eine Windkraftanlage oder eine Werbewärmepumpe, ausgebildet sein. Bei dem externen Energieabnehmer kann es sich um jegliche Art von Energieabnehmer handeln, der über das elektrische Versorgungsnetz mit der Energieeinspeiseeinheit verbunden ist. Beispielsweise handelt es sich bei dem externen Energieabnehmer um Stadtwerke, einen Kraftwerksbetreiber, einen Netzbetreiber, einen Stromhändler oder in der Nähe gelegene Gebäude bzw. Betriebe. Über das elektrische Versorgungsnetz kann auch eine Vielzahl von externen Energieabnehmern mit der Energieeinspeiseeinheit verbunden sein.

Bei der ersten Datenspeichereinheit kann es sich um jede Art von Datenspeichereinheit handeln, die ein Lesen und Schreiben von Daten ermöglicht. Für die Datenspeicherung ist auch eine Cloud-basierte Datenspeicherung denkbar. Die erste Kommunikationsschnittstelle kann als jede Art von Kommunikationsschnittstelle, wie beispielsweise eine Internet-, Mobilfunk-, LAN- oder WLAN-Schnittstelle ausgebildet sein, die eine Kommunikation mit einem externen Energieabnehmer (beispielsweise einem Netzbetreiber) ermöglicht. Entsprechend kann es sich bei dem Kommunikationsnetzwerk um ein Datennetzwerk (Internet, 5G-Netz, etc.) handeln, welches dazu eingerichtet ist, Kommunikation über die jeweilige erste Kommunikationsschnittstelle zur ermöglichen. Da die Steuerungseinheit in Kellerräumen installiert sein kann, arbeitet die erste Kommunikationsschnittstelle für eine drahtlose Verbindung zum Internet vorzugsweise nach dem 3GPP Narrowband Internet of Things (NB-IoT) oder Long Range Wide Area Network (LoRaWAN) Standard.

Bei dem ersten Wert handelt es sich vorzugsweise um einen Strompreis, z.B. einen Preis für eine Kilowattstunde (kWh), welcher über die erste Kommunikationsschnittstelle von dem externen Energieabnehmer empfangen wird. Bei dem zweiten Wert kann es sich ebenfalls um einen Strompreis handeln. Wichtig ist, dass dem ersten und dem zweiten Wert die gleiche Einheit zugewiesen ist, so dass diese vergleichbar sind.

Die Steuerungseinheit vergleicht den ersten Wert mit dem zweiten Wert. Insbesondere bestimmt die Steuerungseinheit, ob der von dem externen Energieabnehmer angebotene Strompreis akzeptabel ist, und entscheidet in Abhängigkeit von dem Vergleichsergebnis, ob die von dem Energieerzeuger erzeugte elektrische Energie in das elektrische Versorgungsnetz eingespeist wird. Ist der empfangene erste Wert beispielsweise höher als der gespeicherte zweite Wert, so wird das Angebot des externen Energieabnehmers angenommen. Ist der empfangene erste Wert jedoch niedriger oder gleich dem gespeicherten zweiten Wert, so wird das Angebot des externen Energieabnehmers nicht angenommen.

Da der erste Wert von dem externen Energieabnehmer stammt, kann dieser dem Energieerzeuger einen Anreiz geben, die von ihm erzeugte Energie in das elektrische Versorgungsnetz einzuspeisen. Ist es beispielsweise zur Sicherung der Netzstabilität notwendig, dass zusätzliche Energie in das elektrische Versorgungsnetz eingespeist wird, so kann der externe Energieabnehmer dem Energieerzeuger einen relativ hohen Strompreis über den ersten Wert anbieten, was die Wahrscheinlichkeit erhöht, dass dieser das Angebot annimmt und er die von ihm erzeugte Energie in das elektrische Versorgungsnetz einspeist. Folglich hat der externe Energieabnehmer eine indirekte Steuerungsmöglichkeit (über ein höheres Angebot), zur Sicherung der Netzstabilität eine zusätzliche Energieeinspeisung anzufordern.

Gemäß einer Ausführungsform ist die Energieeinspeiseeinheit mit einer Batterie verbunden, welche dazu eingerichtet ist, von dem Energieerzeuger erzeugte Energie zwischen zu speichern und die Steuerungseinheit ist dazu eingerichtet, die Einspeisung der elektrischen Energie in das elektrische Versorgungsnetz auch dann zu steuern, wenn die Batterie nicht vollgeladen ist. In diesem Fall wird selbst dann wenn die von dem Energieerzeuger erzeugte elektrische Energie noch zum Laden der Batterie verwendet werden kann, die erzeugte elektrische Energie in das elektrische Versorgungsnetz eingespeist. Dabei hat die Stabilität des elektrischen Versorgungsnetzes eine höhere Priorität als die Zwischenspeicherung von elektrischer Energie in der Batterie. Dazu kann die Steuerungseinheit von der Batterie bzw. einem Laderegler mit Information hinsichtlich des Ladestandes der Batterie versorgt werden. Insbesondere kann vorgesehen sein, dass bis zu einem vorgegebenen Mindestladezustand der Batterie von dem Energieerzeuger erzeugte elektrische Energie in das elektrische Versorgungsnetz eingespeist wird. Es ist aber auch möglich, dass die von dem Energieerzeuger erzeugte elektrische Energie in das elektrische Versorgungsnetz eingespeist wird wenn die Batterie vollständig entladen ist. Des Weiteren kann von der Steuerungseinheit ein relativ niedriger erster Wert akzeptiert werden, wenn die Batterie bereits fast vollgeladen ist, d.h., einen vorbestimmten Mindestladezustand aufweist. In diesem Fall sind in der ersten Datenspeichereinheit für verschiedene Batterieladezustände verschiedene zweite Werte gespeichert.

Die Energieeinspeiseeinheit kann ferner mit einem Verbraucher (beispielsweise einem Kühlschrank, einer Waschmaschine, einer Beleuchtung, usw.) elektrisch verbunden sein. In diesem Fall kann die Steuerungseinheit dazu eingerichtet sein, die Einspeisung der elektrischen Energie in das elektrische Versorgungsnetz auch dann zu steuern wenn der Verbraucher die von dem Energieerzeuger erzeugte Energie verbrauchen kann. Dies bedeutet, dass zur Erhöhung der Netzstabilität des elektrischen Versorgungsnetzes auch dann von dem Energieerzeuger erzeugte Energie in das elektrische Versorgungsnetz eingespeist wird wenn diese von dem Verbraucher verwendet werden könnte. So ist es denkbar, dass eine Priorisierung von Verbrauchern stattfindet, d.h. bestimmte Verbraucher in einem Haus oder Gebäude noch mit von dem Energieerzeuger erzeugter Energie versorgt werden, jedoch weitere Verbraucher keine Energie von dem Energieerzeuger erhalten und diese weitere Energie in das elektrische Versorgungsnetz eingespeist wird.

Die Steuerungseinheit kann ferner eine Authentifikationseinheit aufweisen, die dazu eingerichtet ist, zu authentifizieren, ob der erste Wert von dem externen Energieabnehmer stammt. Da die Einspeisung elektrische Energie in das elektrische Versorgungsnetz Auswirkungen auf die Netzstabilität haben kann, muss sichergestellt werden, dass keine gefälschten ersten Werte von der Steuerungseinheit als wahre erste Werte erachtet werden. Man stelle sich zum Beispiel vor, dass eine Vielzahl von gefälschten ersten Werten mit einem hohen ersten Wert an eine Vielzahl von Steuerungseinheiten gesendet wird und die Vielzahl von Steuerungseinheiten aufgrund des hohen ersten Wertes entscheidet, zur gleichen Zeit elektrische Energie in das elektrische Versorgungsnetz einzuspeisen. In diesem Fall besteht die Gefahr, dass durch die vielfachen Netzeinspeisungen die Stabilität des elektrischen Versorgungsnetzes aus dem Gleichgewicht gerät.

Die Steuerungseinheit kann ferner eine zweite Datenspeichereinheit aufweisen, die dazu eingerichtet ist, eine Zertifikat zur Authentifizierung des externen Energieabnehmers und/oder eine Internetadresse zum Senden einer Bestätigung des empfangenen ersten Wertes über die erste Kommunikationsschnittstelle zu speichern. Beispielsweise kann vorgesehen sein, dass eine Annahme eines Angebots an eine bestimmte Internetadresse gesendet werden muss sodass der Annahmeempfänger feststellen kann, falls ein unechtes Angebot angenommen wurde und dementsprechend reagieren bzw. die Behörden informieren. Die Steuerungseinheit kann auch mit Hilfe des Zertifikats überprüfen, ob der empfangene erste Wert tatsächlich von dem angegebenen externen Energieabnehmer stammt. Durch derartige Sicherheitsmaßnahmen kann sichergestellt werden, dass ein gefälschter erster Wert von dem Energieerzeuger nicht als korrekter erster Wert angesehen wird, wodurch eine weitere Sicherheit der Netzstabilität gewährleistet wird. Darüber hinaus wird der Energieerzeuger davor geschützt, dass er von ihm erzeugte Energie in das elektrische Versorgungsnetz einspeist, diese jedoch nicht abgerechnet wird und er kein Geld erhält.

Die zweite Datenspeichereinheit kann ein Nur-Lese-Speicher (Festwertspeicher) sein, und/oder die in der zweiten Datenspeichereinheit gespeicherten Daten können passwortgeschützt und/oder codiert gespeichert sein. Durch diese Schutzmaßnahmen ist es möglich, dass beispielsweise das Zertifikat oder die Internetadresse nicht einfach geändert werden kann, was wiederum die Sicherheit gegen eine Manipulation von außen verringert bzw. zur Sicherung der Netzstabilität beiträgt. Die zweite Datenspeichereinheit ann auch als Trusted Platform Modul (TPM) ausgebildet sein. Des Weiteren ist es möglich, die über die erste Kommunikationsschnittstelle ausgetauschten Daten über eine Blockchain zu authentifizieren. Dabei haben sowohl die Steuerungseinheit als auch der externe Energieabnehmer Zugriff auf einen Distributed Ledger und dessen nicht veränderbaren Transaktionsdatensatz, in dem der erste Wert gespeichert ist.

Die erste Kommunikationsschnittstelle kann auch dazu eingerichtet sein, über das Kommunikationsnetzwerk jeweilige erste Werte von einer Vielzahl von externen Energieabnehmern zu empfangen. Dadurch wird es dem Energieerzeuger ermöglicht, die von ihm erzeugte elektrische Energie an verschiedene externe Energieabnehmer zu liefern. Handelt es sich bei dem ersten Wert beispielsweise um eine Strompreisangabe, so kann derjenige externe Energieabnehmer, der zu einem gewissen Zeitpunkt einen hohen Energiebedarf zur Sicherung der Netzstabilität hat, durch Senden eines relativ hohen ersten Wertes an die erste Kommunikationsschnittstelle die Wahrscheinlichkeit erhöhen, dass er den Zuschlag zur Lieferung der von dem Energieerzeuger erzeugten elektrischen Energie erhält.

In der Steuerungseinheit kann die erste Datenspeichereinheit dazu eingerichtet sein, eine Vielzahl von zweiten Werten jeweils zusammen mit einem Batterieladezustand und/oder einer Zeitangabe zu speichern und die Steuerungseinheit dazu eingerichtet sein, die Einspeisung der elektrischen Energie in das elektrische Versorgungsnetz in Abhängigkeit von dem Batterieladezustand und/oder der Zeitangabe zu steuern. Bei dieser Ausführungsform sind in der ersten Datenspeichereinheit direkte Zuordnungen zwischen zweiten Werten und Batterieladezustand und/oder Zeit gespeichert. Dadurch ist es dem Energieerzeuger möglich, in Abhängigkeit von dem Ladezustand der Batterie oder einer bestimmten Zeit individuell zu entscheiden, ob es für ihn Sinn macht, elektrische Energie in das elektrische Versorgungsnetz einzuspeisen. So kann der Energieerzeuger beispielsweise berücksichtigen, wenn er zu einer gewissen Zeit, beispielsweise am Morgen, einen üblicherweise hohen Energiebedarf hat, sodass er für diese Zeit den zweiten Wert hoch setzt und nur bei einem höheren ersten Wert damit einverstanden ist, elektrische Energie in das elektrische Versorgungsnetz einzuspeisen. Es liegt dann in der Hand des externen Energieabnehmers zu entscheiden, wie viel es ihm wert ist, die von dem Energieerzeuger erzeugte elektrische Energie zu erhalten. Die Eingabe der zweiten Werte in die erste Datenspeichereinheit kann manuell über eine mit der Energieeinspeiseeinheit verbundene Bedieneinheit oder über die erste Kommunikationsschnittstelle erfolgen.

In der Steuerungseinheit kann die erste Datenspeichereinheit dazu eingerichtet sein, für verschiedene externe Energieabnehmer verschiedene zweite Werte zu speichern, die erste Kommunikationsschnittstelle dazu eingerichtet sein, den ersten Wert zusammen mit einer Angabe eines dazugehörigen Energieabnehmers von dem externen Energieabnehmer zu empfangen und die Steuerungseinheit dazu eingerichtet sein, für jeden externen Energieabnehmer den ersten Wert mit dem zweiten Wert zu vergleichen und die Einspeisung der elektrischen Energie in das elektrische Versorgungsnetz in Abhängigkeit von diesen Vergleichsergebnissen zu steuern. Bei dieser Ausführungsform werden von der ersten Kommunikationsschnittstelle Datenpaare bestehend aus erstem Wert und Energieabnehmer bzw. Kennung des Energieabnehmers empfangen. Entsprechend speichert die erste Datenspeichereinheit Datenpaare bestehend aus zweitem Wert und Energieabnehmer bzw. Kennung des Energieabnehmers. Dadurch wird es dem Energieerzeuger ermöglicht, eine Priorisierung hinsichtlich der externen Energieabnehmer vorzunehmen. So kann der Energieerzeuger beispielsweise einen externen Energieabnehmer bevorzugen, an dessen Versorgungsnetz die Energieeinspeiseeinheit angeschlossen ist, d.h. für einen solchen externen Energieabnehmer den zweiten Wert relativ zu dem zweiten Wert für einen anderen externen Energieabnehmer niedriger ansetzen, sodass dieser bei zeitgleichen Angeboten bevorzugt den Zuschlag erhält. Es kann ferner vorgesehen sein, dass ein bestimmter externer Energieabnehmer nur für bestimmte Zeiträume priorisiert wird.

Die Steuerungseinheit weist ferner eine synchronisierte Uhr auf, die dazu eingerichtet ist, sich über die erste Kommunikationsschnittstelle mit einer zentralen Uhr zu synchronisieren, wobei die erste Kommunikationsschnittstelle dazu eingerichtet ist, den ersten Wert zusammen mit einer zeitlichen Gültigkeit des ersten Werts von dem externen Energieabnehmer zu empfangen und die Steuerungseinheit dazu eingerichtet ist, mit Hilfe der synchronisierten Uhr die zeitliche Gültigkeit des ersten Werts zu prüfen und nur bei einer zeitlichen Gültigkeit des ersten Werts die Einspeisung der elektrischen Energie in das elektrische Versorgungsnetz zu steuern.

Da sich die Netzauslastung ständig ändert, kann es für den externen Energieabnehmer von Vorteil sein, wenn nur für einen bestimmten Zeitraum zusätzliche elektrische Energie in das elektrische Versorgungsnetz eingespeist wird. Um zu vermeiden, dass die Gültigkeit des ersten Wertes durch eine weitere Mitteilung widerrufen werden muss, ist es hilfreich, den ersten Wert mit einer Gültigkeitsangabe zu versehen. Nur während der Gültigkeit des ersten Wertes steuert die Steuerungseinheit die Energieeinspeiseeinheit zur Einspeisung der erzeugten elektrischen Energie in das elektrische Versorgungsnetz, d.h., bei Ablauf der Gültigkeit des ersten Wertes wird auch die Einspeisung gestoppt. Mit Hilfe der synchronisierten Uhr ist es dann auf einfache Weise für die Steuerungseinheit möglich, zu bestimmen, ob der erste Wert noch gültig ist. Folglich kann mit Hilfe der synchronisierten Uhr die Kommunikation vereinfacht und das Kommunikationsnetz weniger belastet werden. Die zentrale Uhr, mit der sich die synchronisierte Uhr synchronisiert, kann beispielsweise von einem Netzbetreiber, Stadtwerken oder einem Energieversorger bereitgestellt werden. Es ist auch denkbar, dass die zentrale Uhr von einem Institut, wie zum Beispiel der Physikalisch-Technischen Bundesanstalt, bereitgestellt wird. So kann die synchronisierte Uhr beispielsweise einmal oder mehrmals am Tag mit Hilfe der zentralen Uhr über die erste Kommunikationsschnittstelle synchronisiert werden. Der Absender des ersten Wertes ist dabei ebenfalls über die zentrale Uhr synchronisiert.

Die erste Kommunikationsschnittstelle kann ferner dazu eingerichtet sein, den ersten Wert zusammen mit einem Energiemenge von dem externen Energieabnehmer zu empfangen und die Steuerungseinheit kann dazu eingerichtet sein, die Einspeisung der elektrischen Energie in das elektrische Versorgungsnetz in Abhängigkeit von der empfangenen Energiemenge zu steuern. Gemäß dieser Ausführungsform beendet die Steuerungseinheit die Einspeisung der elektrischen Energie in das elektrische Versorgungsnetz wenn die angeforderte Energiemenge in das elektrische Versorgungsnetz eingespeist wurde. Dies kann für eine präzise Erhöhung der Netzstabilität von Vorteil sein, da nur eine bestimmte Energiemenge, die für die Gewährleistung der Netzstabilität notwendig ist, in das elektrische Versorgungsnetz eingespeist wird.

Die vorliegende Offenbarung betrifft ferner eine Energieeinspeiseeinheit mit einem Wechselrichter, wobei die Energieeinpeiseeinheit dazu eingerichtet ist, mit einer vorstehend beschriebenen Steuerungseinheit verbunden zu werden. Gemäß dieser Ausführungsform steuert die Steuerungseinheit den Wechselrichter zum Einspeisen des von dem Energieerzeuger erzeugten Gleichstroms als Wechselstrom in das elektrische Versorgungsnetz.

Die vorliegende Offenbarung betrifft des Weiteren ein Energieeinspeisesystem mit einer vorstehend beschriebenen Energieeinspeiseeinheit, einer vorstehend beschriebenen Steuerungseinheit und einem Energieerzeuger. Bei dem Energieerzeuger kann es sich beispielsweise um eine Photovoltaikanlage, eine Windkraftanlage, eine Wärmepumpe, oder jede andere Art von Energieerzeuger handeln.

Das Energieeinspeisesystem kann des Weiteren eine Batterie zum Zwischenspeichern von von dem Energieerzeuger erzeugter Energie und Mittel zum Bestimmen des Ladezustandes der Batterie aufweisen, wobei die Energieeinspeiseeinheit dazu eingerichtet ist, die Einspeisung der von dem Energieerzeuger erzeugten elektrischen Energie in das elektrische Versorgungsnetz in Abhängigkeit von dem Ladezustand der Batterie zu steuern. Bei der Batterie kann es sich um jede Art von Energiespeicher, insbesondere eine Lithiumionenbatterie handeln, welche ein Zwischenspeichern von elektrischer Energie und Abgabe der gespeicherten elektrischen Energie an einen Verbraucher ermöglicht. Bei dem Mittel zum Bestimmen des Ladezustands der Batterie kann es sich beispielsweise um eine Multimeter oder einen Laderegler handeln, welcher der Steuerungseinheit den Ladezustand der Batterie übermittelt. So kann insbesondere vorgesehen sein, dass bis zu einem gewissen Mindestladezustand der Batterie auch dann von dem Energieerzeuger erzeugte elektrische Energie in das elektrische Versorgungsnetz eingespeist werden kann, wenn die Batterie nicht vollgeladen ist, was einerseits zu einer Erhöhung der Netzstabilität des elektrischen Versorgungsnetzes beitragen kann, andererseits aber auch die Ausfallversorgungssicherheit beim Energieerzeuger durch die zumindest teilweise geladene Batterie gewährleistet.

Ein weiterer Aspekt der vorliegenden Offenbarung betrifft eine Netzinfrastruktur mit einem vorstehend beschriebenen Energieeinspeisesystem, einem elektrischen Versorgungsnetz, mit welchem das Energieeinspeisesystem elektrisch verbunden ist, Mittel zum Bestimmen der Netzstabilität des elektrischen Versorgungsnetzes und einem externen Energieabnehmer mit einer zweiten Kommunikationsschnittstelle, die dazu eingerichtet ist, in Abhängigkeit von der bestimmten Netzstabilität des elektrischen Versorgungsnetzes den ersten Wert an die erste Kommunikationsschnittstelle zu senden. Bei der Netzinfrastruktur kann es sich auch um ein virtuelles Kraftwerk, d.h. eine Zusammenschaltung von dezentralen Stromerzeugungseinheiten zu einem Verbund handeln.

Bei dem Mittel zum Bestimmen der Netzstabilität des elektrischen Versorgungsnetzes kann es sich beispielsweise um eine Vielzahl von Phasor- (Pulsed High-Amplitude Sinusoidal Electromagnetic Radiation) Messgeräten handeln, die den Stromfluss im und den Leitungsstatus des elektrischen Versorgungsnetzes in Echtzeit messen. Erkennt der externe Energieabnehmer mit Hilfe der Mittel zum Bestimmen der Netzstabilität des elektrischen Versorgungsnetzes, dass zum Einhalten der Netzstabilität zusätzliche Regelenergie benötigt wird, so kann er über die zweite Kommunikationsschnittstelle an die erste Kommunikationsschnittstelle einen relativ hohen ersten Wert senden, wodurch der Energieerzeuger einen Anreiz erhält, die von ihm erzeugte elektrische Energie in das elektrische Versorgungsnetz einzuspeisen. Folglich hat der externe Energieabnehmer eine indirekte Steuerungsmöglichkeit zur Erhöhung der Energieeinspeisung, d.h. zur Erhöhung der Netzstabilität.

### KURZE BESCHREIBUNG DER ZEICHNUNGEN

Weitere Vorteile, Einzelheiten und Merkmale der hier beschriebenen Vorrichtungen und Systeme ergeben sich aus der nachfolgenden Beschreibung von Ausführungsbeispielen sowie aus den Figuren.
Fig. 1 zeigt eine schematische Ansicht eines Ausführungsbeispiels einer Netzinfrastruktur mit einer Energieeinspeiseeinheit und einer Steuerungseinheit in einem Energieeinspeisesystem, welches über ein elektrisches Versorgungsnetz mit einem externen Energieabnehmer verbunden ist; und
Fig. 2 zeigt eine schematische Ansicht einer Steuerungseinheit.

### DETAILLIERTE BESCHREIBUNG

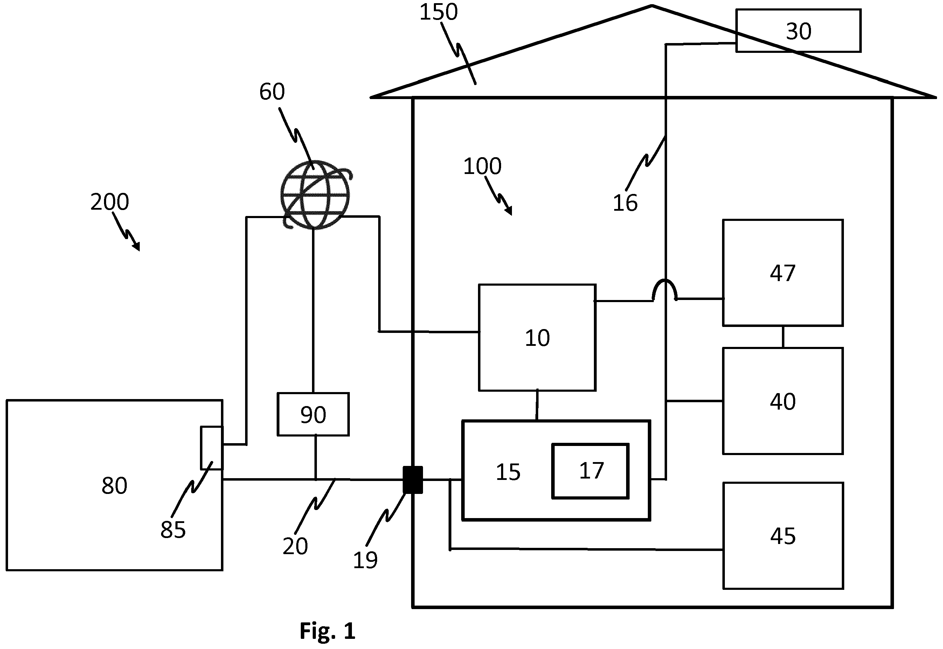

Die Fig. 1 zeigt eine schematische Ansicht einer Netzinfrastruktur 200 mit einem Energieeinspeisesystem 100, welches über ein elektrisches Versorgungsnetz 20 mit einem externen Energieabnehmer 80, beispielsweise einem Netzbetreiber, verbunden ist. Das Energieeinspeisesystem 100 befindet sich in einem Gebäude 150 und umfasst eine Energieeinspeiseeinheit 15, auf dem Dach des Gebäudes 150 montierte Photovoltaikmodule 30, und eine Batterie 40 zum Zwischenspeichern von von den Photovoltaikmodulen 30 erzeugter elektrischer Energie. Die Energieeinspeiseeinheit 15, die Photovoltaikmodule 30 und die Batterie 40 sind über eine Verkabelung 16 in dem Gebäude 150 elektrisch miteinander verbunden. Bei der Verkabelung 16 handelt es sich um Gleichstromleitungen. Die Energieeinspeiseeinheit 15 umfasst einen Wechselrichter 17 zum Wandeln des von den Photovoltaikmodulen 30 erzeugten Gleichstroms in Wechselstrom. Die Photovoltaikmodule 30 können in Reihe oder parallel an dem Wechselrichter 17 angeschlossen sein. Über einen Hausanschluss 19 ist die Energieeinspeiseeinheit 15 mit dem elektrischen Versorgungsnetz 20 verbunden.

Die Energieeinspeiseeinheit 15 kann neben dem Wechselrichter 17 noch weitere in Fig. 1 nicht gezeigte elektrische Komponenten, wie beispielsweise Leistungsstatus-Erfassungsmittel zum phasenselektiven Erfassen von im Einspeisepunkt anfallenden Wirk-und Blindleistungen, Eigenbedarf-Erfassungsmittel zur phasenselektiven Erfassung von bestehenden Eigenbedarf und Netzeinspeisungs-Vorgabemittel zur phasenselektiven Vorgabe einer zulässigen Netzeinspeisungsleistung aufweisen.

Zwischen Energieeinspeiseeinheit 15 und Hausanschluss 19 ist mindestens ein elektrischer Verbraucher 45 (beispielsweise ein Kühlschrank, eine Waschmaschine oder eine Lampe) angeschlossen, der dazu eingerichtet ist, von den Photovoltaikmodulen 30 erzeugte Energie, in der Batterie 40 zwischengespeicherte Energie oder über das elektrische Versorgungsnetz 20 bereitgestellte Energie zu verbrauchen.

Zur Steuerung der Einspeisung der von den Photovoltaikmodulen 30 erzeugter Energie in das elektrische Versorgungsnetz 20 ist eine Steuerungseinheit 10 vorgesehen. Die Steuerungseinheit 10 steuert die Energieeinspeiseeinheit 15 zum Starten und Beenden der Einspeisung der von den Photovoltaikmodulen 30 erzeugten Energie. Obwohl die Steuerungseinheit 10 und die Energieeinspeiseeinheit 15 in der Fig. 1 als separate Einheiten dargestellt sind ist es denkbar, dass beide Einheiten als eine Einheit ausgebildet sind. Die Steuerungseinheit 10 ist mit einem Batterieladezustandsmessgerät 47 verbunden, welches dazu eingerichtet ist, den Ladezustand der Batterie 40 zu messen und an die Steuerungseinheit 10 weiterzuleiten. Beispielsweise kann das Batterieladezustandsmessgerät 47 der Steuerungseinheit 10 einen Wert einer elektrischen Ladung in Amperestunden (Ah) oder ein Ladeprozentwert übermitteln. Die Steuerungseinheit 10 ist ferner mit dem Internet 60 verbunden.

In dem in Fig. 1 gezeigten Ausführungsbeispiel handelt es sich bei der Batterie 40 um einen Gleichstrom-gekoppelten Batteriespeicher, der über einen Gleichstromwandler mit Laderegler (in Fig. 1 nicht gezeigt) über die Verkabelung 16 mit den Photovoltaikmodulen 30 verbunden ist. Insbesondere ist die Batterie 40 als Lithiumionenbatterie ausgebildet. Alternativ ist es möglich, einen Wechselstrom-gekoppelten Batteriespeicher zu verwenden, bei dem die Batterie 40, ähnlich wie der Verbraucher 45, zwischen Energieeinspeiseeinheit 15 und Hausanschluss 19 vorgesehen ist. In diesem Fall ist die Batterie 40 über einen Batteriewechselrichter mit Laderegler mit der Energieeinspeiseeinheit 15 verbunden.

Über das elektrische Versorgungsnetz 20 ist das Energieeinspeisesystem 100 mit dem externen Energieabnehmer 80 verbunden. Der externe Energieabnehmer 80 weist eine zweite Kommunikationsschnittstelle 85 auf, welche mit dem Internet 60 verbunden ist, sodass die Steuerungseinheit 10 über das Internet 60 mit der zweiten Kommunikationsschnittstelle 85 kommunizieren kann.

Des Weiteren sind Mittel 90 zum Bestimmen der Netzstabilität des elektrischen Versorgungsnetzes vorgesehen, die dazu eingerichtet sind, Messungen hinsichtlich der Stabilität des elektrischen Versorgungsnetzes 20 vorzunehmen. Dabei wird die Netzfrequenz an mehreren Punkten des elektrischen Versorgungsnetzes 20 automatisch mittels digitaler Messtechnik und elektronischen Frequenzmessern gemessen. Die Mittel 90 zum Bestimmen der Netzstabilität des elektrischen Versorgungsnetzes sind mit dem Internet 60 verbunden und die Messergebnisse werden an den externen Energieabnehmer 80 weitergeleitet. Dadurch erhält der externe Energieabnehmer 80 in Echtzeit Information hinsichtlich der Stabilität des elektrischen Versorgungsnetzes 20 und kann entsprechend reagieren, z.B. Regelenergie anfordern.

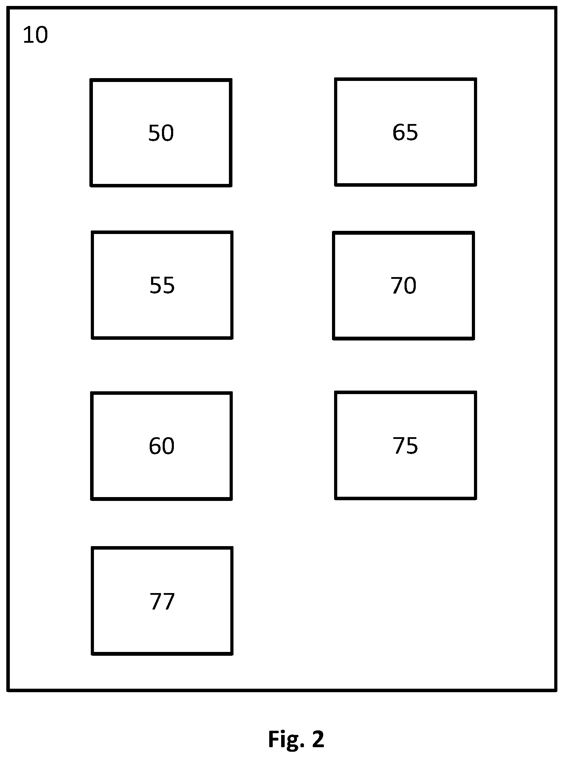

Die Fig. 2 zeigt eine schematische Ansicht eines Ausführungsbeispiels einer Steuerungseinheit 10, die dazu eingerichtet ist, mit einer Energieeinspeiseeinheit 15 verbunden zu werden. Vorzugsweise handelt es sich bei der Steuerungseinheit 10 um die in der Fig. 1 gezeigte Steuerungseinheit 10.

Die Steuerungseinheit 10 umfasst eine erste Kommunikationsschnittstelle 50, eine erste Datenspeichereinheit 55, eine Steuerungseinheit 60, eine Authentifikationseinheit 65, eine zweite Datenspeichereinheit 70, eine synchronisierte Uhr 75 und eine Bedieneinheit 77.

Über die Bedieneinheit 77 kann ein Nutzer Werte in die erste Datenspeichereinheit 55 eingeben. Insbesondere kann der Nutzer über die Bedieneinheit 77 einen Strompreis in Kilowatt pro Stunde als zweiten Wert in die erste Datenspeichereinheit 55 eingeben. Zusammen mit mehreren zweiten Werten besteht für den Nutzer auch die Möglichkeit, über die Bedieneinheit 77 weitere mit den zweiten Werten in Zusammenhang stehende Werte in die erste Datenspeichereinheit 55 einzugeben. So kann der Nutzer zusammen mit jedem zweiten Wert einen jeweiligen extern Energieabnehmer 80 und/oder einen Ladezustandswert der Batterie 40 in die erste Datenspeichereinheit 55 eingeben.

Die erste Kommunikationsschnittstelle 50 kann von dem externen Energieabnehmer 80 über das Internet 60 jeweilige erste Werte empfangen. Wie bei dem zweiten Wert handelt es sich bei dem ersten Wert um einen Strompreis in Kilowatt pro Stunde. Zusammen mit dem ersten Wert kann die erste Kommunikationsschnittstelle 50 weitere Werte von dem externen Energieabnehmer 80 über das Internet 60 erhalten. So kann der externe Energieabnehmer 80 zusätzlich eine Identifikationskennung des Absenders, d.h. des externen Energieabnehmers 80, und/oder eine Gültigkeit des ersten Wertes an die Steuerungseinheit 10 senden.

Nachdem die erste Kommunikationsschnittstelle 50 den ersten Wert empfangen hat, vergleicht die Steuerungseinheit 10 den empfangenen ersten Wert mit dem in der ersten Datenspeichereinheit 55 gespeicherten zweiten Wert. Ist der empfangene erste Wert höher als der gespeicherte zweite Wert, so bedeutet dies, dass der Mindestpreis des Energieerzeugers durch das Angebot des externen Energieabnehmers 80 übertroffen wurde. In diesem Fall steuert die Steuerungseinheit 10 die Energieeinspeiseeinheit 15 derart, dass die von den Photovoltaikmodulen 30 erzeugte Energie in das elektrische Versorgungsnetz 20 einspeist wird. Entsprechend erfolgt eine Abrechnung zwischen Energieerzeuger und externem Energieabnehmer 80.

Weitere Kriterien zum Start der Einspeisung der von den Photovoltaikmodulen 30 erzeugten Energie in das elektrische Versorgungsnetz 20 können sein, dass der erste Wert noch gültig ist, dass der erste Wert von einem bestimmten externen Energieabnehmer 80 stammt, und/oder dass der Ladezustand der Batterie 40 nicht unter einem vorgegebenen Mindestwert legt. Ein Zutreffen dieser Kriterien wird von der Steuerungseinheit 10 überprüft.

Zum einfachen Bestimmen der Gültigkeit eines von der ersten Kommunikationsschnittstelle 50 empfangenen ersten Wertes weist die Steuerungseinheit 10 eine synchronisierte Uhr 75 auf, welche sich regelmäßig zu vorgegebenen Zeiten mit einer zentralen Uhr (in den Figuren nicht gezeigt) synchronisiert. Der externe Energieabnehmer 80 ist ebenfalls mit der zentralen Uhr synchronisiert, sodass zusammen mit dem ersten Wert übermittelte Gültigkeitsangaben auf einfache Weise von der Steuerungseinheit 10 auf Gültigkeit überprüft werden können. Ist ein erster Wert nicht mehr gültig, so steuert die Steuerungseinheit 10 die Energieeinspeiseeinheit 15 zum Beenden der Einspeisung der von den Photovoltaikmodulen 30 erzeugten Energie in das elektrische Versorgungsnetz 20.

Üblicherweise wird die von den Photovoltaikmodulen 30 erzeugte Energie nur dann in das elektrische Versorgungsnetz 20 eingespeist, wenn die Batterie 40 vollgeladen ist. Bei der vorliegenden Ausführungsform ist es jedoch möglich, dass auch dann wenn die Batterie 40 nicht vollgeladen ist, von den Photovoltaikmodulen 30 erzeugte Energie in das elektrische Versorgungsnetz 20 eingespeist wird. Dies kann insbesondere dann zur Stabilität des elektrischen Versorgungsnetzes 20 beitragen, wenn der externe Energieabnehmer 80 kurzfristig Regelenergie benötigt. Da das Batterieladezustandsmessgerät 47 die Steuerungseinheit 10 über den Ladezustand der Batterie 40 auf dem Laufenden hält, kann auch eine derartige Steuerung erfolgen, dass immer ein Mindestladezustand der Batterie 40 beibehalten wird bevor Energie in das elektrische Versorgungsnetz 20 eingespeist wird. Ferner kann die Steuerungseinheit 10 die Energieeinspeiseeinheit 15 auch derart steuern, dass selbst dann wenn der Verbraucher 45 Energie verbraucht, die von den Photovoltaikmodulen 30 erzeugte Energie in das elektrische Versorgungsnetz 20 eingespeist wird. In diesem Fall kann der Verbraucher 45 von einem anderen Energieanbieter mit Strom versorgt werden.

Des Weiteren kann die erste Kommunikationsschnittstelle 50 zusammen mit dem ersten Wert eine Energiemenge von dem externen Energieabnehmer 80 empfangen. In diesem Fall beendet die Steuerungseinheit 10 die Einspeisung der elektrischen Energie durch die Energieeinspeiseeinheit 15 in das elektrische Versorgungsnetz 20 wenn die angeforderte Energiemenge eingespeist wurde. Zu diesem Zweck kann die Steuerungseinheit 10 mit einem Einspeisezähler (in Fig. 1 nicht gezeigt) verbunden sein.

Da die Kommunikation zwischen dem externen Energieabnehmer 80 und der Steuerungseinheit 10 über das öffentliche Internet 60 erfolgt, muss sichergestellt werden, dass die Steuerungseinheit 10 gefälschte erste Werte erkennt. Zu diesem Zweck gibt es mehrere Sicherheitsmaßnahmen. Zum einen umfasst die Steuerungseinheit 10 eine Authentifikationseinheit 65, die dazu eingerichtet ist, zu Authentifizieren, ob der erste Wert von dem externen Energieabnehmer 80 stammt. Des Weiteren umfasst die Steuerungseinheit 10 eine zweite Datenspeichereinheit 70, die dazu eingerichtet ist, ein Zertifikat zur Authentifizierung des externen Energieabnehmers 80 zu speichern. In der zweiten Datenspeichereinheit 70 kann auch eine Internetadresse gespeichert sein, an die eine Bestätigung des empfangenen ersten Werts gesendet werden muss. Bei der Internetadresse kann es sich beispielsweise um eine Internetadresse des externen Energieabnehmers 80 handeln. Wird ein falscher erster Wert von der ersten Kommunikationsschnittstelle 50 empfangenen und eine entsprechende Bestätigung an die Internetadresse geschickt, so weiß der Empfänger, dass ein Betrugsversuch vorlegt und kann entsprechende Gegenmaßnahmen einleiten. Des Weiteren ist es möglich, dass die zweite Datenspeichereinheit 70 als ein Nur-Lese-Speicher ausgebildet ist, d.h. dass Zertifikat und/oder die Internetadresse ab Werk in der zweiten Datenspeichereinheit 70 gespeichert wurden. Ferner können die in der zweiten Datenspeichereinheit 70 gespeicherten Daten passwortgeschützt und/oder codiert gespeichert sein.

Gemäß einer weiteren Ausführungsform ist es möglich, dass mehrere externe Energieabnehmer 80 (in Fig. 1 nicht gezeigt) jeweilige erste Werte an die Energieeinspeiseeinheit 15 senden. In diesem Fall vergleicht die Steuerungseinheit 10 diese Vielzahl von empfangenen ersten Werten mit dem in der ersten Datenspeichereinheit 55 gespeicherten zweiten Wert und wählt das Angebot desjenigen externen Energieabnehmers 80 mit dem höchsten ersten Werte aus, vorausgesetzt dieser liegt über dem gespeicherten zweiten Wert.

Der Eigenverbrauch in dem Gebäude 150 wird mit dem externen Energieabnehmer 80 abgerechnet. Zu diesem Zweck sind in dem Gebäude 150 mehrere Stromzähler (in Fig. 1 nicht gezeigt) installiert. Es handelt es sich dabei um einen Bezugszähler, der den aus dem elektrischen Versorgungsnetz 20 bezogenen Strom zählt, einen Einspeisezähler, der den in das elektrische Versorgungsnetz 20 eingespeisten Strom zählt, und einen Ertragszähler, der den insgesamt von den Photovoltaikmodulen 30 erzeugten Strom zählt. Der Eigenverbrauch ergibt sich aus der Differenz von erzeugter und eingespeister Energie.

Im Folgenden wird ein Ausführungsbeispiel der vorliegenden Offenbarung aus Sicht des in der Fig. 1 gezeigten externen Energieabnehmers 80 beschrieben.

Der externe Energieabnehmer 80 wird über das Internet 60 von den Mitteln 90 zum Bestimmen der Netzstabilität darüber informiert, dass zum Ausgleich einer zu niedrigen Netzfrequenz des elektrischen Versorgungsnetzes 20 positive Regelenergie benötigt wird. Der externe Energieabnehmer 80 entscheidet sich dazu, einen Teil der benötigten Regelenergie von dem Energieeinspeisungssystem 100 als Sekundärreserve oder Minutenreserve anzufordern. Dazu sendet der externe Energieabnehmer 80 über die zweite Kommunikationsschnittstelle 85 einen Strompreis (erster Wert) zusammen mit einer Gültigkeit des ersten Wertes an die erste Kommunikationsschnittstelle 50. Basierend auf Erfahrungswerten aus der Vergangenheit hat der externe Energieabnehmer 80 den ersten Wert derart gewählt, dass dieser für das Energieeinspeisungssystem 100 attraktiv ist und das Energieeinspeisungssystem 100 das Angebot des externen Energieabnehmers 80 mit einer hohen Wahrscheinlichkeit annehmen wird. Nimmt das Energieeinspeisungssystem 100 das Angebot des externen Energieabnehmers 80 an, so speist das Energieeinspeisungssystem 100 Energie in das elektrische Versorgungsnetz 20 ein. Sobald der erste Wert nicht mehr gültig ist, beendet das Energieeinspeisungssystem 100 die Einspeisung in das elektrische Versorgungsnetz 20. Entsprechend der Einspeisung und dem ersten Wert vergütet der externe Energieabnehmer 80 den Betreiber des Energieeinspeisungssystems 100.

Im Folgenden wird ein weiteres Ausführungsbeispiel der vorliegenden Offenbarung aus Sicht des in den Figuren 1 und 2 gezeigten Energieeinspeisungssystems 100 beschrieben.

Bei ausreichender Sonneneinstrahlung erzeugen die Photovoltaikmodule 30 Gleichstrom, welcher von dem Wechselrichter 17 in Wechselstrom gewandelt und von dem Verbraucher 45 verbraucht wird. Falls die Batterie 40 nicht vollgeladen ist, so wird diese geladen.

Die Steuerungseinheit 10 erhält über die erste Kommunikationsschnittstelle 50 von dem externen Energieabnehmer 80 einen ersten Wert zusammen mit einer zeitlichen Gültigkeitsangabe des ersten Wertes. Mit Hilfe der Authentifikationseinheit 65 überprüft die Steuerungseinheit 10 ob der erste Wert echt ist. Nach erfolgreicher Authentifizierung des ersten Wertes vergleicht die Steuerungseinheit 10 den ersten Wert mit dem in der ersten Datenspeichereinheit 55 gespeicherten zweiten Wert. Des Weiteren überprüft die Steuerungseinheit 10 mit Hilfe der synchronisierten Uhr 75 ob der erste Wert noch gültig ist.

Bestimmt die Steuerungseinheit 10, dass ein annehmbares Angebot von dem externen Energieabnehmer 80 eingegangen ist (erster Wert ist größer als der gespeicherte zweite Wert) und der erste Wert noch gültig ist, so steuert die Steuerungseinheit 10 die Energieeinspeiseeinheit 15 derart, dass die von den Photovoltaikmodulen 30 erzeugte Energie in das elektrische Versorgungsnetz 20 eingespeist wird. Optional kann die Steuerungseinheit 10 dem externen Energieabnehmer 80 eine Nachricht senden, dass das Angebot des externen Energieabnehmers 80 angenommen wurde. Nach Ablauf der Gültigkeit des ersten Wertes beendet die Steuerungseinheit 10 die Energieeinspeisung in das elektrische Versorgungsnetz 20. Anschließend werden über die erste Kommunikationsschnittstelle 50 die Netzeinspeisedaten zur Abrechnung an den externen Energieabnehmer 80 gesendet.

Gemäß einer Weiterbildung des vorstehend erläuterten Ausführungsbeispiels ist eine Voraussetzung für die Einspeisung, dass die Batterie 40 mindestens zu 50% geladen ist. In diesem Fall prüft die Steuerungseinheit 10 vor dem Start einer Energieeinspeisung den von dem Batterieladezustandsmessgerät 47 übermittelten Ladezustand der Batterie 40. Beträgt der Ladezustand der Batterie 40 mindestens 50%, so startet die Energieeinspeisung. Beträgt der Ladezustand der Batterie 40 weniger als 50%, so erfolgt keine Energieeinspeisung. Optional kann die Steuerungseinheit 10 den externen Energieabnehmer 80 darüber informieren, dass sein Angebot nicht angenommen wurde.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Steuerungseinheit (10) für eine Energieeinspeiseeinheit (15) zur Einspeisung von elektrischer Energie in ein elektrisches Versorgungsnetz (20), wobei die Energieeinspeiseeinheit (15) mit dem elektrisches Versorgungsnetz (20) und einem Energieerzeuger (30) elektrisch verbunden ist, und die Steuerungseinheit (10) aufweist:
eine erste Kommunikationsschnittstelle (50), die dazu eingerichtet ist, über ein Kommunikationsnetzwerk (60) einen ersten Wert von einem externen Energieabnehmer (80), der über das elektrische Versorgungsnetz (20) mit der Energieeinspeiseeinheit (15) verbunden ist, zu empfangen,
eine erste Datenspeichereinheit (55), die dazu eingerichtet ist, einen zweiten Wert zu speichern und
eine synchronisierte Uhr (75), die dazu eingerichtet ist, sich über die erste Kommunikationsschnittstelle (50) mit einer zentralen Uhr zu synchronisieren, wobei
die Steuerungseinheit (10) dazu eingerichtet ist, den ersten Wert mit dem zweiten Wert zu vergleichen und in Abhängigkeit von dem Vergleichsergebnis die Einspeisung der elektrischen Energie in das elektrische Versorgungsnetz (20) zu steuern,
**dadurch gekennzeichnet, dass**
die erste Kommunikationsschnittstelle (50) dazu eingerichtet ist, den ersten Wert zusammen mit einer zeitlichen Gültigkeit des ersten Werts von dem externen Energieabnehmer (80) zu empfangen und
die Steuerungseinheit (10) dazu eingerichtet ist, mit Hilfe der synchronisierten Uhr (75) die zeitliche Gültigkeit des ersten Werts zu prüfen und nur bei einer zeitlichen Gültigkeit des ersten Werts die Einspeisung der elektrischen Energie in das elektrische Versorgungsnetz (20) zu steuern.

2. Steuerungseinheit (10) nach Anspruch 1, ferner aufweisend
eine Authentifikationseinheit (65), die dazu eingerichtet ist, zu authentifizieren, ob der erste Wert von dem externen Energieabnehmer (80) stammt.

3. Steuerungseinheit (10) nach Anspruch 2, ferner aufweisend
eine zweite Datenspeichereinheit (70), die dazu eingerichtet ist, eine Zertifikat zur Authentifizierung des externen Energieabnehmers (80) und/oder eine Internetadresse zum Senden einer Bestätigung des empfangenen ersten Wertes über die erste Kommunikationsschnittstelle (50) zu speichern.

4. Steuerungseinheit (10) nach Anspruch 3, wobei
die zweite Datenspeichereinheit (70) ein Nur-Lese-Speicher ist, und/oder
die in der zweiten Datenspeichereinheit (70) gespeicherten Daten passwortgeschützt und/oder codiert gespeichert sind.

5. Steuerungseinheit (10) nach einem der vorhergehenden Ansprüche, wobei die erste Kommunikationsschnittstelle (50) dazu eingerichtet ist, über das Kommunikationsnetzwerk (60) jeweilige erste Werte von einer Vielzahl von externen Energieabnehmern (80) zu empfangen.

6. Steuerungseinheit (10) nach einem der vorhergehenden Ansprüche, wobei
die erste Datenspeichereinheit (55) dazu eingerichtet ist, eine Vielzahl von zweiten Werten jeweils zusammen mit einem Batterieladezustand und/oder einer Zeitangabe zu speichern und
die Steuerungseinheit (10) dazu eingerichtet ist, die Einspeisung der elektrischen Energie in das elektrische Versorgungsnetz (20) in Abhängigkeit von dem Batterieladezustand und/oder der Zeitangabe zu steuern.

7. Steuerungseinheit (10) nach Anspruch 5, wobei
die erste Datenspeichereinheit (55) dazu eingerichtet ist, für verschiedene externe Energieabnehmer (80) verschiedene zweite Werte zu speichern,
die erste Kommunikationsschnittstelle (50) dazu eingerichtet ist, den ersten Wert zusammen mit einer Angabe eines dazugehörigen externen Energieabnehmers (80) von dem externen Energieabnehmer (80) zu empfangen und
die Steuerungseinheit (10) dazu eingerichtet ist, für jeden externen Energieabnehmer (80) den ersten Wert mit dem zweiten Wert zu vergleichen und die Einspeisung der elektrischen Energie in das elektrische Versorgungsnetz (20) in Abhängigkeit von diesen Vergleichsergebnissen zu steuern.

8. Steuerungseinheit (10) nach einem der vorhergehenden Ansprüche, wobei
die erste Kommunikationsschnittstelle (50) dazu eingerichtet ist, den ersten Wert zusammen mit einem Energiemenge von dem externen Energieabnehmer (80) zu empfangen und
die Steuerungseinheit (10) dazu eingerichtet ist, die Einspeisung der elektrischen Energie in das elektrische Versorgungsnetz (20) in Abhängigkeit von der empfangenen Energiemenge zu steuern.

9. Energieeinspeisesystem (100) aufweisend
die Steuerungseinheit (10) gemäß einem der Ansprüche 1 bis 8 und
eine Energieeinspeiseeinheit (15) mit einem Wechselrichter (17), wobei die Energieeinspeiseeinheit (15) mit der Steuerungseinheit (10) verbunden ist.

10. Energieeinspeisesystem (100) nach Anspruch 9, ferner aufweisend
eine Batterie (40) zum Zwischenspeichern von von dem Energieerzeuger (30) erzeugter Energie und
Mittel (47) zum Bestimmen des Ladezustandes der Batterie, wobei
die Steuerungseinheit (10) dazu eingerichtet ist, die Einspeisung der von dem Energieerzeuger (30) erzeugten elektrischen Energie in das elektrische Versorgungsnetz (20) in Abhängigkeit von dem Ladezustand der Batterie (40) zu steuern.

11. Energieeinspeisesystem (100) nach Anspruch 9, ferner aufweisend
eine Batterie (40) zum Zwischenspeichern von von dem Energieerzeuger (30) erzeugter Energie, wobei
die Steuerungseinheit (10) dazu eingerichtet ist, die Einspeisung der elektrischen Energie in das elektrische Versorgungsnetz (20) auch dann zu steuern, wenn die Batterie (40) nicht vollgeladen ist.

12. Energieeinspeisesystem (100) nach einem der Ansprüche 9 bis 11, wobei
die Energieeinspeiseeinheit (15) dazu eingerichtet ist, mit einem Verbraucher (45) elektrisch verbunden zu werden und
die Steuerungseinheit (10) dazu eingerichtet ist, die Einspeisung der elektrischen Energie in das elektrische Versorgungsnetz (20) auch dann zu steuern, wenn der Verbraucher (45) von dem Energieerzeuger (30) erzeugte Energie verbrauchen kann.

13. Netzinfrastruktur (200) aufweisend
das Energieeinspeisesystem (100) nach einem der Ansprüche 9 bis 12,
ein elektrisches Versorgungsnetz (20), mit welchem das Energieeinspeisesystem (100) elektrisch verbunden ist,
Mittel (90) zum Bestimmen der Netzstabilität des elektrischen Versorgungsnetzes und
einen externen Energieabnehmer (80) mit einer zweiten Kommunikationsschnittstelle (85), die dazu eingerichtet ist, in Abhängigkeit von der bestimmten Netzstabilität des elektrischen Versorgungsnetzes (20) den ersten Wert an die erste Kommunikationsschnittstelle (50) zu senden.

## Claims

1. Control unit (10) for an energy feed-in unit (15) for feeding electrical energy into an electrical supply grid (20), wherein the energy feed-in unit (15) is electrically connected to the electrical supply grid (20) and an energy generator (30), and the control unit (10) comprises:
a first communication interface (50), which is configured to receive, via a communication network (60), a first value from an external energy consumer (80), which is connected to the energy feed-in unit (15) via the electrical supply grid (20),
a first data storage unit (55), which is configured to store a second value and
a synchronized clock (75), which is configured to synchronize with a central clock via the first communication interface (50), wherein
the control unit (10) is configured to compare the first value with the second value and to control the feeding-in of the electrical energy into the electrical supply grid (20) depending on the comparison result,
**characterized in that**
the first communication interface (50) is configured to receive the first value together with a temporal validity of the first value from the external energy consumer (80) and
the control unit (10) is configured to check the temporal validity of the first value with the aid of the synchronized clock (75) and to control the feeding-in of the electrical energy into the electrical supply grid (20) only in the case of a temporal validity of the first value.

2. Control unit (10) according to claim 1, further comprising
an authentication unit (65), which is configured to authenticate whether the first value originates from the external energy consumer (80).

3. Control unit (10) according to claim 2, further comprising
a second data storage unit (70), which is configured to store a certificate for authentication of the external energy consumer (80) and/or an Internet address for sending a confirmation of the received first value via the first communication interface (50).

4. Control unit (10) according to claim 3, wherein
the second data storage unit (70) is a read-only memory, and/or
the data stored in the second data storage unit (70) are stored password-protected and/or encoded.

5. Control unit (10) according to one of the preceding claims, wherein the first communication interface (50) is configured to receive, via the communication network (60), respective first values from a plurality of external energy consumers (80).

6. Control unit (10) according to one of the preceding claims, wherein
the first data storage unit (55) is configured to store a plurality of second values each together with a battery charge state and/or a time indication and
the control unit (10) is configured to control the feeding-in of the electrical energy into the electrical supply grid (20) depending on the battery charge state and/or the time indication.

7. Control unit (10) according to claim 5, wherein
the first data storage unit (55) is configured to store different second values for different external energy consumers (80),
the first communication interface (50) is configured to receive the first value together with an indication of an associated external energy consumer (80) from the external energy consumer (80) and
the control unit (10) is configured to compare, for each external energy consumer (80), the first value with the second value and to control the feeding-in of the electrical energy into the electrical supply grid (20) depending on these comparison results.

8. Control unit (10) according to one of the preceding claims, wherein
the first communication interface (50) is configured to receive the first value together with an amount of energy from the external energy consumer (80) and
the control unit (10) is configured to control the feeding-in of the electrical energy into the electrical supply grid (20) depending on the received amount of energy.

9. Energy feed-in system (100) comprising
the control unit (10) according to one of claims 1 to 8 and
an energy feed-in unit (15) having an inverter (17), wherein the energy feed-in unit (15) is connected to the control unit (10).

10. Energy feed-in system (100) according to claim 9, further comprising
a battery (40) for intermediate storage of energy generated by the energy generator (30) and
means (47) for determining the charge state of the battery, wherein
the control unit (10) is configured to control the feeding-in of the electrical energy generated by the energy generator (30) into the electrical supply grid (20) depending on the charge state of the battery (40).

11. Energy feed-in system (100) according to claim 9, further comprising
a battery (40) for intermediate storage of energy generated by the energy generator (30), wherein
the control unit (10) is configured to control the feeding-in of the electrical energy into the electrical supply grid (20) even when the battery (40) is not fully charged.

12. Energy feed-in system (100) according to one of claims 9 to 11, wherein
the energy feed-in unit (15) is configured to be electrically connected to a load (45) and
the control unit (10) is configured to control the feeding-in of the electrical energy into the electrical supply grid (20) even when the load (45) can consume energy generated by the energy generator (30).

13. Grid infrastructure (200) comprising
the energy feed-in system (100) according to one of claims 9 to 12,
an electrical supply grid (20), to which the energy feed-in system (100) is electrically connected,
means (90) for determining the grid stability of the electrical supply grid and
an external energy consumer (80) having a second communication interface (85), which is configured to send, depending on the determined grid stability of the electrical supply grid (20), the first value to the first communication interface (50).

## Revendications

1. Unité de commande (10) pour une unité d'injection d'énergie (15) destinée à injecter de l'énergie électrique dans un réseau d'alimentation électrique (20), dans laquelle l'unité d'injection d'énergie (15) est reliée électriquement au réseau d'alimentation électrique (20) et à un générateur d'énergie (30), et l'unité de commande (10) présente :
une première interface de communication (50), qui est configurée pour recevoir, par l'intermédiaire d'un réseau de communication (60), une première valeur d'un consommateur d'énergie externe (80), qui est relié à l'unité d'injection d'énergie (15) par l'intermédiaire du réseau d'alimentation électrique (20),
une première unité de mémoire de données (55), qui est configurée pour stocker une deuxième valeur et
une horloge synchronisée (75), qui est configurée pour se synchroniser avec une horloge centrale par l'intermédiaire de la première interface de communication (50), dans laquelle
l'unité de commande (10) est configurée pour comparer la première valeur à la deuxième valeur et pour commander, en fonction du résultat de comparaison, l'injection de l'énergie électrique dans le réseau d'alimentation électrique (20),
**caractérisée en ce que**
la première interface de communication (50) est configurée pour recevoir la première valeur avec une validité temporelle de la première valeur du consommateur d'énergie externe (80) et
l'unité de commande (10) est configurée pour vérifier, à l'aide de l'horloge synchronisée (75), la validité temporelle de la première valeur et pour commander l'injection de l'énergie électrique dans le réseau d'alimentation électrique (20) uniquement en cas de validité temporelle de la première valeur.

2. Unité de commande (10) selon la revendication 1, présentant en outre
une unité d'authentification (65), qui est configurée pour authentifier si la première valeur provient du consommateur d'énergie externe (80).

3. Unité de commande (10) selon la revendication 2, présentant en outre
une deuxième unité de mémoire de données (70), qui est configurée pour stocker un certificat destiné à authentifier le consommateur d'énergie externe (80) et/ou une adresse Internet destinée à envoyer une confirmation de la première valeur reçue par l'intermédiaire de la première interface de communication (50).

4. Unité de commande (10) selon la revendication 3, dans laquelle
la deuxième unité de mémoire de données (70) est une mémoire morte, et/ou
les données stockées dans la deuxième unité de mémoire de données (70) sont stockées de manière protégée par mot de passe et/ou codée.

5. Unité de commande (10) selon l'une des revendications précédentes, dans laquelle la première interface de communication (50) est configurée pour recevoir, par l'intermédiaire du réseau de communication (60), des premières valeurs respectives d'une pluralité de consommateurs d'énergie externes (80).

6. Unité de commande (10) selon l'une des revendications précédentes, dans laquelle
la première unité de mémoire de données (55) est configurée pour stocker une pluralité de deuxièmes valeurs respectivement avec un état de charge de batterie et/ou une indication temporelle et
l'unité de commande (10) est configurée pour commander l'injection de l'énergie électrique dans le réseau d'alimentation électrique (20) en fonction de l'état de charge de batterie et/ou de l'indication temporelle.

7. Unité de commande (10) selon la revendication 5, dans laquelle
la première unité de mémoire de données (55) est configurée pour stocker différentes deuxièmes valeurs pour différents consommateurs d'énergie externes (80),
la première interface de communication (50) est configurée pour recevoir la première valeur avec une indication d'un consommateur d'énergie externe (80) correspondant du consommateur d'énergie externe (80) et
l'unité de commande (10) est configurée pour comparer, pour chaque consommateur d'énergie externe (80), la première valeur à la deuxième valeur et pour commander l'injection de l'énergie électrique dans le réseau d'alimentation électrique (20) en fonction de ces résultats de comparaison.

8. Unité de commande (10) selon l'une des revendications précédentes, dans laquelle
la première interface de communication (50) est configurée pour recevoir la première valeur avec une quantité d'énergie du consommateur d'énergie externe (80) et
l'unité de commande (10) est configurée pour commander l'injection de l'énergie électrique dans le réseau d'alimentation électrique (20) en fonction de la quantité d'énergie reçue.

9. Système d'injection d'énergie (100) présentant
l'unité de commande (10) selon l'une des revendications 1 à 8 et
une unité d'injection d'énergie (15) avec un onduleur (17), dans lequel l'unité d'injection d'énergie (15) est reliée à l'unité de commande (10).

10. Système d'injection d'énergie (100) selon la revendication 9, présentant en outre
une batterie (40) destinée au stockage temporaire d'énergie générée par le générateur d'énergie (30) et
des moyens (47) destinés à déterminer l'état de charge de la batterie, dans lequel
l'unité de commande (10) est configurée pour commander l'injection de l'énergie électrique générée par le générateur d'énergie (30) dans le réseau d'alimentation électrique (20) en fonction de l'état de charge de la batterie (40).

11. Système d'injection d'énergie (100) selon la revendication 9, présentant en outre
une batterie (40) destinée au stockage temporaire d'énergie générée par le générateur d'énergie (30), dans lequel
l'unité de commande (10) est configurée pour commander l'injection de l'énergie électrique dans le réseau d'alimentation électrique (20) même lorsque la batterie (40) n'est pas entièrement chargée.

12. Système d'injection d'énergie (100) selon l'une des revendications 9 à 11, dans lequel
l'unité d'injection d'énergie (15) est configurée pour être reliée électriquement à un consommateur (45) et
l'unité de commande (10) est configurée pour commander l'injection de l'énergie électrique dans le réseau d'alimentation électrique (20) même lorsque le consommateur (45) peut consommer de l'énergie générée par le générateur d'énergie (30).

13. Infrastructure de réseau (200) présentant
le système d'injection d'énergie (100) selon l'une des revendications 9 à 12,
un réseau d'alimentation électrique (20), auquel le système d'injection d'énergie (100) est relié électriquement,
des moyens (90) destinés à déterminer la stabilité du réseau du réseau d'alimentation électrique et
un consommateur d'énergie externe (80) avec une deuxième interface de communication (85), qui est configurée pour envoyer, en fonction de la stabilité du réseau déterminée du réseau d'alimentation électrique (20), la première valeur à la première interface de communication (50).
